# EUROPÄISCHE PATENTSCHRIFT

(11) **EP 3 679 238 B1**
(45) Veröffentlichungstag und Bekanntmachung des Hinweises auf die Patenterteilung: **20.01.2021**
(21) Anmeldenummer: 17809250.8
(22) Anmeldetag: 28.11.2017
(51) Int. Cl.: F02M 21/02, B63B 17/00, B61C 5/00, F17C 13/12

(54) **MOBILES CONTAINER-TANKMODUL**
MOBILE CONTAINER-TANK MODULE
MODULE CONTENEUR RÉSERVOIR MOBILE

(43) Veröffentlichungstag der Anmeldung: 15.07.2020
(73) Patentinhaber: Technolog GmbH Handels- und Beteiligungsgesellschaft für Technologie, 20459 Hamburg (DE)
(72) Erfinder: RADEBOLD, Helmut, 25379 Herzhorn (DE)
(74) Vertreter: Wunderlich & Heim Patentanwälte Partnerschaftsgesellschaft mbB
(86) Internationale Anmeldenummer: PCT/EP2017/080672
(87) Internationale Veröffentlichungsnummer: WO 2019/105529

(56) Entgegenhaltungen:
- EP-A1- 2 228 294
- WO-A1-2013/138734
- WO-A1-2016/019057

## Beschreibung

Die Erfindung betrifft ein mobiles Container-Tankmodul für Flüssiggas als Kraftstoff für Antriebs- oder Energieerzeugungs-Aggregate als Verbraucher gemäß Oberbegriff des Anspruchs 1.

Aufgrund strenger werdender Vorschriften zum Umweltschutz ist man auch beim Antrieb von Schiffen darum bemüht, von bisherigen Kraftstoffen wie Schweröl oder Schiffsdiesel abzugehen und Flüssiggas als Kraftstoff für Antriebs- und Energieerzeugungs-Aggregate einzusetzen.

Ein Beispiel hierfür ist in der EP 2 607 224 A1 beschrieben. Die darin angeführten Kraftstoffcontainer zur Aufnahme von LNG oder LPG werden zwar mit entsprechendem Flüssiggas befüllt und von Land auf das entsprechende Schiff verladen. An Bord des Schiffes wird die entsprechende Abgabeleitung für das LNG an eine Andockstation angeschlossen, die mit fest an Bord des Schiffes platzierten Prozesseinrichtungen für die Aufbereitung des Flüssiggases über Verdampfer, Erhitzer oder Komprimierer etc. verbunden ist, um das Gas nachfolgend entsprechenden Antriebsaggregaten zuzuleiten.

Der derart eingesetzte, Flüssiggas enthaltende Kraftstoffcontainer dient hierbei im Wesentlichen als Transportbehältnis für das eingesetzte Flüssiggas, wobei die Anschlussprobleme des Kraftstoffcontainers mit der entsprechenden Andockstation und insbesondere Leckageprobleme in diesen Bereichen erhalten bleiben. Zudem sind diese Kraftstoffcontainer nur an Bord von Schiffen einsetzbar, die stationär angeordnete Prozesseinrichtungen aufweisen.

Da auch bei anderen Verbrauchern, die zum Beispiel landseitig fest oder mobil installiert sind, ebenso die Überlegungen zur Versorgung dieser Verbraucher mit Flüssiggas als Kraftstoff vorgesehen wird, wobei auch die Versorgung von Kraftwerken, Lokomotiven oder anderen Landfahrzeugen miteinbezogen wird, wird auch für diese Bereiche angestrebt, ein komplettes mobiles Container-Tankmodul zur Verfügung zu haben.

Ein Vorschlag in diese Richtung kann zum Beispiel der KR 20130057322 A entnommen werden. Im Rahmen dieses Vorschlages wird ein Container-Tankmodul für Flüssiggas empfohlen, das fest verbunden mit dem eigentlichen Tank und innerhalb des Transportrahmens des Containers auch eine Verdampfereinrichtung aufweist, die mehrere hintereinander geschaltete großflächige Wärmetauscher umfasst.

Das in dieser Druckschrift beschriebene mobile Container-Tankmodul bedarf am Ausgang des Verdampfers noch weiterer Prozesseinheiten, um die Aufbereitung des Flüssiggases zur direkten Zuleitung an Verbraucher vorzusehen. Beispielsweise sind externe Separatoren und Kompressoren für die weitere Aufbereitung des Flüssiggases erforderlich. Diese weiteren Prozesseinheiten sind in der Regel stationär auf einem Schiff oder als fest installierte Baugruppe zum Beispiel bei landseitigen Verbrauchern wie Kraftwerken installiert.

Eine direkte Abgabe von Gas als Kraftstoff für Endverbraucher für Antriebsaggregate ist daher bei diesem vorgeschlagenen Container-Tankmodul nicht möglich.

Da das vorausgehend beschriebene Container-Tankmodul zum Verdampfen von LNG Umgebungsluft einsetzt, bedarf es relativ großer Wärme-Austauschflächen, die zwangsläufig einen nennenswerten Teil des Containervolumens beanspruchen, wodurch das Tankvolumen für LNG erheblich eingeschränkt wird.

Andere Aufbereitungsanlagen für Flüssiggas, insbesondere für den Schiffsbetrieb, sind beispielsweise aus der DE 10 2007 008 723 A1 oder der DE 10 2009 002 578 A1 bekannt. Bei diesen Aufbereitungsanlagen sind die Prozesseinrichtungen wie Verdampfer, Heizeinrichtungen, Kompressoren, Pumpen und Wärmetauscher und dergleichen jedoch stationär angeordnet und daher fest eingebaut in Schiffen, anderen Fahrzeugen oder Kraftwerken vorgesehen. Andere Beispiele sind aus WO 2013/138734A1 und EP2228294A1 bekannt.

Die Beispiele der vorausgehend genannten stationären Aufbereitungsanlagen für Flüssiggas bringen einerseits Sicherheitsprobleme mit sich, die insbesondere durch die Übergabevorgänge und das Befüllen von stationär zum Beispiel auf Schiffen vorgesehenen LNG-Tanks von Landseite her. Derartige stationär in Schiffen oder anderen Fahrzeugen eingebaute LNG-Tanks können aber auch nicht so flexibel und sicher gehandhabt werden, wie ein mobiles Container-Tankmodul, wie es Ziel und Konzept der vorliegenden Erfindung ist.

**Aufgabe** der Erfindung ist es daher, ein mobiles Container-Tankmodul für Flüssiggas als Kraftstoff zu schaffen, das bestmögliche Sicherheit bei den unterschiedlichen Einsatzmöglichkeiten gewährleistet und des Weiteren hohe Einsatzflexibilität ermöglicht, wobei insbesondere der Einsatz auf Schiffen berücksichtigt werden soll.

Diese Aufgabe wird gemäß der Erfindung bei einem mobilen Container-Tankmodul mittels der Merkmale des Anspruchs 1 gelöst.

Vorteilhafte Weiterbildungen der Erfindung werden in den Unteransprüchen beansprucht und in der Beschreibung weiter ausgeführt.

Ein Kerngedanke der Erfindung ist es, ein mobiles Container-Tankmodul befüllt mit dem entsprechenden Flüssiggas, im Nahbereich zu den zu versorgenden Antriebs- oder Energieerzeugungsaggregaten platzieren zu können, und diese Aggregate möglichst direkt mit dem aufbereiteten Flüssiggas als Kraftstoff versorgen zu können, wobei die kompletten beziehungsweise alle Prozesseinrichtungen zur Aufbereitung des Flüssiggases, insbesondere zur Verdampfung des Flüssiggases, zur Erwärmung des Gases, zur Komprimierung, zur Druckeinstellung und zur Förderung des Gases, als innerhalb der Abmessungen des Container-Tankmoduls integrierte Prozesseinrichtungen vorgesehen sind. Hierbei ist bevorzugt ein Anschluss des Container-Tankmoduls für eine externe Energiequelle, speziell zur Aufnahme von Prozesswärme für die Verdampfung von Flüssiggas, vorhanden und ein weiterer Anschluss für die Abgabe des aufbereiteten Gases an die Antriebs- und Energieerzeugungsaggregate. Die integrierten Prozesseinrichtungen werden geschützt ausgelegt und/oder angeordnet, so dass der direkte Nahbereich als nicht explosionsgefährdet angesehen werden kann.

Ein weiterer wesentlicher Gedanke ist, anstelle einer externen Energiequelle eine integrierte, interne Energiequelle, insbesondere eine Heizeinrichtung, in Art einer Standheizung bei Fahrzeugen, vorzusehen.

Das vorausgehend genannte Konzept erlaubt daher einerseits eine hohe Flexibilität bei der Kraftstoffbevorratung, indem zum Beispiel eine größere Anzahl derartiger mit Flüssigkeit befüllter mobiler Container-Tankmodule auf einem Schiff im nähestmöglichen Bereich zu Haupt- und Hilfsaggregaten, insbesondere als stapelbare Container angeordnet werden. Gleichzeitig ermöglicht ein derartiges mobiles Container-Tankmodul, kritische Leitungsanschlüsse, insbesondere für Flüssiggas, zu containerexternen Aggregaten zu vermeiden, da sämtliche zur Aufbereitung des Flüssiggases erforderlichen Prozesseinrichtungen und Komponenten komplett im Bereich des Tanks, unterhalb des Tanks, also mit kürzesten Leitungswegen installiert sind. Hierbei werden die integrierten Prozesseinrichtungen, wie Verdampfer, Wärmetauscher, Pumpen, Ventile und derartige Einrichtungen in Gehäusen und/oder Boxen innerhalb der Abmessungen des Container-Tankmoduls untergebracht, so dass hohe Sicherheitsstandards erreicht werden.

Das Container-Tankmodul ist daher auch mobil und transportabel konzipiert, wodurch es möglich ist, die Befüllung des Tankmoduls vorzugsweise landseitig in geeigneten Flüssiggas-Terminals oder Befüllungsstationen durchzuführen, so dass das Risiko des Umgangs mit tiefkaltem LNG, beispielsweise von -163°C, durch lösbare Kupplungen oder flexible Schläuche als potenzielle Schwachstellen und Gefahrenort von Leckagen, zum landseitigen Befüllungsort verlagert werden kann.

Der vorausgehende Begriff LNG oder LPG steht hierbei grundsätzlich auch für verflüssigtes Gas oder andere verdampfbare Flüssigbrennstoffe, worunter auch Methanol subsumiert wird.

Die Verwendung des mobilen Container-Tankmoduls ist nicht nur für Schiffe geeignet, sondern auch für andere Verbraucher wie Kraftwerke oder stationär installierte Antriebe, aber auch weitere mobile Verbraucher wie Lokomotiven und andere Land- oder Wasserfahrzeuge.

Zweckmäßigerweise ist der cryogenische Tank als isolierter Drucktank mit Zylinderform ausgelegt, wobei für die Tieftemperatur des Flüssiggases eine geeignete Isolierung, zum Beispiel eine Vakuum-Superisolierung oder mit Polyurethanschaum vorgesehen wird. Auch andere Tankformen, zum Beispiel als Membrantank, sind denkbar. Druckbelastete Tanks haben jedoch den Vorteil, dass durch deren Flexibilität längere Stillstandszeiten vorgesehen werden können und dabei auch ein damit verbundener Druckaufbau tolerierbar wird.

Das Container-Tankmodul ist so konzipiert, dass die erforderlichen Prozesskomponenten zur Steuerung und Überwachung der Prozessabläufe, wie zum Beispiel der Verdampfung oder Komprimierung des Flüssiggases oder der Zustände des Flüssiggases, integriert im Container-Tankmodul vorgesehen sind.

Zum Verdampfen von Flüssiggas können auch Energiequellen, wie zum Beispiel elektrisch betriebene Heizeinrichtungen oder Kraftstoff-betriebene Heizeinrichtungen wie bei Fahrzeugen, insbesondere als Standheizungen bekannt, eingesetzt werden.

Die Integration dieser Komponenten ist dahingehend zu verstehen, dass einerseits die Anordnung innerhalb der Abmessungen der eingesetzten Container, insbesondere von Standard-Containern, liegt. Bei entsprechenden Erfordernissen können auch von Standard-Containern abweichende Containerabmessungen und Transport- und Rahmenstrukturen verwendet werden.

Diese integrierte Platzierung der Komponenten bedeutet andererseits auch, dass die Komponenten wie Ventile, Sensoren, Pumpen, Wärmetauscher und dergleichen möglichst kompakt und miniaturisiert in Gehäusen untergebracht werden, die einerseits einen mechanischen Schutz für diese Komponenten bieten und andererseits auch als Sicherheitshülle im Falle eines unbeabsichtigten Austritts von LNG oder Gas aus Leitungen oder Verbindungselementen fungieren. Die Gehäuse sind hierbei zweckmäßigerweise gasdicht und tieftemperaturgeeignet ausgelegt und so konzipiert, dass die direkte Umgebung im Prinzip als explosionsgeschützt und nicht als explosionsgefährdet eingestuft werden kann.

Die Gehäuse werden hierbei bevorzugt unterhalb des LNG-Tanks angeordnet, so dass auch eine Zuführung des LNGs mittels Schwerkraft gewährleistet ist.

Bei dem Container-Tankmodul wird auch berücksichtigt, dass bevorzugt an einem Endportal, was einer Stirnseite des Tanks entspricht, die Außenanschlüsse von gasführenden Leitungen sicherheitstechnisch separiert, insbesondere auch innerhalb eines Gehäuses vorgesehen sind, wobei das Gehäuse auch zum mechanischen Schutz der hochwertigen Kopplungssysteme dient. Diese Anschlüsse sind dabei nicht durchgängig ausgelegt und müssen durch diese Kapselung nicht durch eine zweite Barriere gesichert werden, so dass auch im Hinblick auf das Leckagerisiko keine Gefahrenzone gebildet wird, in dessen Bereich keine Zündquellen angeordnet werden dürfen. Diese ausgeschaltete Zündgefahr gilt sowohl für die betroffenen Komponenten im Tankmodul als auch für das komplette Container-Tankmodul am Einsatzort.

Die Sicherheitsaspekte führen auch dazu, dass am entgegengesetzten Ende zum vorausgehend genannten Endportal des Tanks, das heißt auf der anderen Seite des Tankmoduls, außerhalb des Explosionsgefahrenbereichs, ein oder weitere Gehäuse beziehungsweise Boxen zur Aufnahme von elektrischen und elektronischen Komponenten sowie von Steckverbindungen für Kraftstrom-, Signal- und Steuerleitungen zum Außenanschluss angeordnet sind. Das Container-Tankmodul weist containerübliche selbsttragende Eigenschaften auf und hat Endportale mit Eckbeschlägen, die zur Lagerung, Stauung und Zurrung des Tankmoduls mit oder ohne Flüssiggas für Land- und Seetransport des Tankmoduls vorgesehen sind.

Sofern anlagen- und einsatzbedingt erforderlich können die an Endportalen angeordneten Leitungen und Anschlüsse in Seitenbereichen oder im oberen und unteren Bereich des Container-Tankmoduls sicherheitstechnisch mit möglichst großem Abstand zwischen gasführenden Leitungen und elektrischen Komponenten vorgesehen werden.

Das Container-Tankmodul kann auch mit drahtlosen Übertragungsmitteln, insbesondere zur GPS-Überwachung, ausgestattet sein, so dass eine Positionsverfolgung von der Befüllstation des Tankmoduls bis zum Einsatzort, zum Beispiel auf einem Schiff, verfolgt werden kann.

Weitere drahtlose Übertragungsmittel können zweckmäßigerweise auch zur Datenübertragung für die Überwachung und Steuerung von Parametern des Container-Tankmoduls, wie zum Beispiel Drücke, Temperaturen, Füllstände im Tank oder bei den Prozessabläufen und deren Steuerung vorgesehen sein.

Das Container-Tankmodul wird vorzugsweise auch so ausgelegt, dass es über eine geeignete Daten-Schnittstelle mit den Gas verbrauchenden Antriebs- oder Energieerzeugungsaggregaten beziehungsweise den Verbrauchern bidirektional kommunizieren kann, um Anforderungen des Verbrauchers, wie zum Beispiel Energiebedarf an Kraftstoff oder Kraftstoffspezifizierung entgegenzunehmen und die entsprechenden Abläufe zu steuern.

Das Container-Tankmodul verfügt über Anschlussstellen für die Gasversorgung des oder der Verbraucher sowie für die Aufnahme von Prozesswärme, insbesondere für die LNG-Verdampfung, wobei auch Kühlwasser von Verbrennungsmotoren oder teilweise See- oder Grundwasser, letzteres bei Landanlagen, eingesetzt werden kann. Auch sind Anschlussstellen für Not- und Sicherheitssysteme vorhanden oder auch nachrüstbar, zum Beispiel eine Überdruck-Abblaseinrichtung für Gas oder auch Spül-, Lösch- oder Kühlwasser für Fälle von Brandbekämpfung.

Das erfindungsgemäße Container-Tankmodul schafft daher die Möglichkeit, sowohl die Lagerung von Flüssiggas wie LNG als auch die gesamte für die Aufbereitung des Flüssiggases erforderliche Prozesstechnik in einem einzigen Modul umzusetzen, so dass Unfallrisiken beim Transport und der sonstigen Handhabung von tiefkaltem, risikobehafteten Flüssiggas am Einsatzort wie einem Schiff minimiert werden können. Andere angedachte Lösungsalternativen zur Aufbereitung von Flüssiggas als Kraftstoff für Verbraucher, insbesondere für Schiffe, bei denen ein zweites Modul, das die Prozesstechnik zur Aufbereitung von LNG umfasst, mit einem Tankcontainer gekoppelt werden oder stationär auf Schiffen installierte Prozesstechnik, haben stets die Nachteile, risikobehaftete Verbindungen zum Transfer des tiefkalten LNGs herstellen zu müssen und scheiden daher als zufriedenstellende Lösungen aus.

Da alle Prozesskomponenten und -einrichtungen systemintegriert in dem einen Container-Tankmodul vorgesehen sind, entfällt auch eine komplexe Installation und Wartung im Aufbereitungsweg des Flüssiggases zum Verbraucher.

Das Container-Tankmodul wird zweckmäßigerweise mit einer standardisierten Schnittstelle ausgestattet, so dass das Container-Tankmodul auf sehr unterschiedlichen Schiffstypen eingesetzt werden kann. Diese standardisierte Schnittstelle ermöglicht auch ein Aufschalten aller Informationen einschließlich Steuerung und Überwachung, auf beim Nutzer vorhandene Datenverarbeitungs-Systeme. Dies gilt beispielsweise auch für das schiffseigene System zur Kommunikation auf und mit der Brücke, aber auch für eine Energiezentrale eines Kraftwerks.

Die standardisierte Schnittstelle ermöglicht auch die Kombination mehrerer Container-Tankmodule in Fällen, in denen eine Vergrößerung der Lager- und Bereitstellungskapazität erforderlich ist.

Das erfindungsgemäße Konzept des Container-Tankmoduls bietet daher den Vorteil der genauen Standortbestimmungenortung jedes einzelnen Container-Tankmoduls. Durch Übermittlung von physikalischen Zustandsdaten von Prozesskomponenten und Einrichtungen wird auch eine Ferndiagnose zu Prozesskomponenten und Prozesszuständen und eine Fernsteuerung dieser Prozesse möglich.

Nachfolgend wird die Erfindung anhand zweier schematischer Zeichnungen und deren Einsatzmöglichkeit noch näher erläutert. Es zeigen:
- Fig. 1: eine vereinfachte Darstellung eines mobilen Container-Tankmoduls in perspektivischer Ansicht innerhalb eines Transportrahmens mit Standard-Abmessungen für Container; und
- Fig. 2: einen Heckbereich eines Schiffes mit der Möglichkeit der Anordnung eines mobilen Container-Tankmoduls.

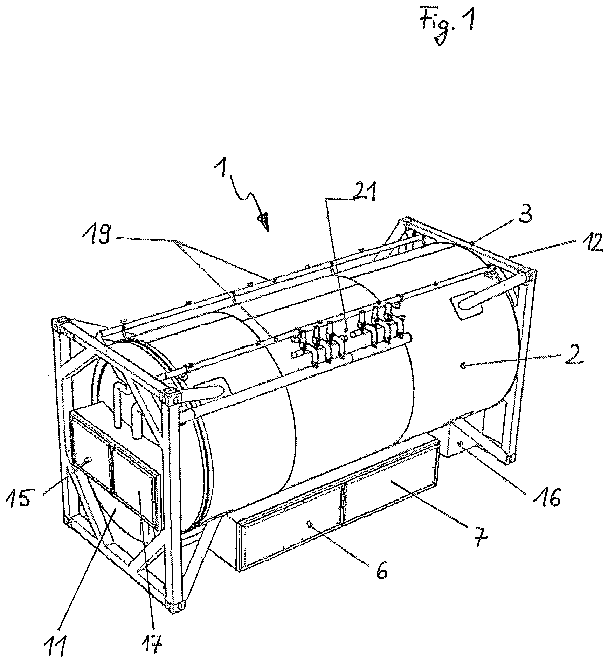

Die schematische und vereinfachte Darstellung nach Fig. 1 zeigt eine perspektivische Ansicht auf ein Container-Tankmodul 1, das einen im Wesentlichen zylindrisch ausgelegten Drucktank 2 aufweist, der innerhalb eines Transportrahmens 3 mit Standard-Abmessungen fest angeordnet ist. Der ein Flüssiggas wie LNG, LPG oder Methanol aufnehmende Drucktank 2 ist mit einem temperaturisolierenden Mantel ausgestattet, um beispielsweise die Temperatur des Flüssiggases LNG bei etwa -163°C gegenüber der Außentemperatur isolieren zu können.

Der Transportrahmen 3 des Container-Tankmoduls 1 kann bevorzugt Standardmaße von verkehrsüblichen Containern mit etwa 40' (Fuß) oder 20' (Fuß) in der Länge aufweisen.

Das Container-Tankmodul 1 ist so ausgelegt, dass alle Prozesseinrichtungen zur Aufbereitung des Flüssiggases für eine direkte Kraftstoffabgabe an Antriebs- oder Energieerzeugungsaggregate innerhalb der Abmessungen des Container-Tankmoduls 1 mit dem Transportrahmen 3 integriert und aufgenommen werden können.

Die Prozesseinrichtungen können hierbei insbesondere zum Beispiel Wärmetauscher zur Verdampfung des Flüssiggases, Heizeinrichtungen zur Erwärmung des Gases, Kompressoren zur Komprimierung und Druckeinstellung des Gases oder auch Pumpen zur Förderung des Gases, aber auch Ventile oder Steuerungsmodule aufweisen. Diese Prozesseinrichtungen werden in kompakter, miniaturisierter Art in Gehäusen 6, 7 oder Boxen 15, 16, 17 installiert. Insbesondere die Gas führenden Leitungen werden hierbei in gasdichten, mechanisch belastbaren und insbesondere gegebenenfalls explosionsgeschützten, Gehäusen 6, 7 untergebracht.

Das beziehungsweise die Gehäuse 6, 7 dienen einerseits als mechanischer Schutz für die Prozesseinrichtungen und -komponenten und haben andererseits die Funktion als Sicherheitshülle im Fall des unbeabsichtigten Austritts von LNG oder Gas aus Leitungen, Verbindungselementen oder Komponenten wie Ventilen, Sensoren, Pumpen und Wärmetauschern. Weiterhin wird mit diesen Gehäusen verhindert, dass die direkte Umgebung als explosionsgefährdet einzustufen ist und dementsprechend auszurüsten ist.

Die Gehäuse 6, 7 und deren integrierte Prozesseinrichtungen werden unterhalb des cryogenischen Tanks 2 angeordnet, so dass auch eine Zuführung von Flüssiggas mittels Schwerkraft nach unten in entsprechende Prozesseinrichtungen gewährleistet ist.

Im linken Bereich der Fig. 1 ist die etwa kreisförmige Abschlussfläche des Drucktanks 2 als Endportal 11 gezeigt. In diesem Bereich sind im Beispiel Anschlussboxen 15 und 17 innerhalb der Containerabmessungen vorgesehen. Die Anschlussbox 15 kann beispielsweise den Anschluss zu einer externen Wärme-Energiequelle aufnehmen. Die Anschlussbox 17 kann für Anschlussstellen für Not- und Sicherheitssysteme wie zum Beispiel eine Überdruck-Abblaseinrichtung für Gas oder für Spül-, Lösch- oder Kühlwasser vorgesehen sein. Die Boxen 15 ,17 sind normalerweise gasdicht und mechanisch hoch belastbar ausgelegt.

Auf der rechten Seite des cryogenischen Drucktanks 2 ist das entgegengesetzte Endportal 12 vorhanden, in dessen Bereich eine oder mehrere Anschlussboxen 16 für elektrische und elektronische Steuerungs- und Überwachungseinrichtungen installiert sind. Die Anschlussbox 16 ist hierbei gezielt mit größerem Abstand zu den Gehäusen 6, 7 oder den Boxen 15, 17 angeordnet, um Explosionsrisiken ausschließen zu können.

Im oberen Bereich des Drucktanks 2 sind des Weiteren Überwachungsarmaturen 21, zum Beispiel Ventile und andere Systeme, dargestellt. Ebenfalls sind Leitungen 19 beidseitig am Drucktank 2 vorgesehen, die Düsen für Lösch- und Kühlwasser aufweisen.

Das erfindungsgemäße mobile Container-Tankmodul eignet sich insbesondere für den Einsatz auf Schiffen, da die komplette Umwandlung und Aufbereitung des Flüssiggases wie LNG als erwärmtes und komprimiertes Gas direkt an Antriebs- oder Energieerzeugungsaggregate abgegeben werden kann. Hierbei werden kürzestmögliche Leitungswege berücksichtigt, da alle Prozesseinrichtungen für die Aufbereitung des Flüssiggases innerhalb der Abmessungen des gewählten Standardcontainers integriert sind.

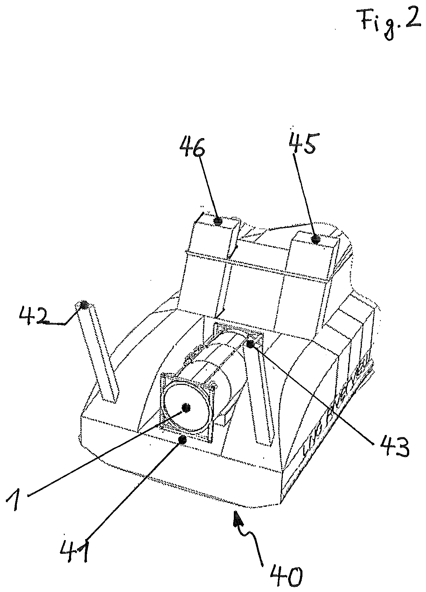

In Fig. 2 ist schematisch und vereinfacht der Heckbereich 40 eines Schiffes dargestellt. In der Mitte des Hecks ist im Beispiel eine offene Plattform 41 für ein mobiles Container-Tankmodul 1 vorhanden, auf der das Container-Tankmodul 1 fest gesichert platziert werden kann. Mit 45, 46 sind Abgaskamine von Maschinen des Schiffes angedeutet. Die Leitungsanschlüsse zur Abgabe von aufbereitetem Gas an die Verbraucher des Schiffes über kurze Wegstrecken wären im Beispiel nach vorne gerichtet.

Ergänzend ist in Fig. 2 backbordseitig am Heck ein Lufteinlassmast 42 und steuerbordseitig ein Abblasmast 43 beziehungsweise ein Mast für Luftauslass dargestellt. Das Container-Tankmodul 1 kann daher als kompaktes Energieversorgungsmodul für Gas als Kraftstoff angesehen werden, das die vollständige Prozesstechnik zur Aufbereitung von Flüssiggas zu Gas beinhaltet und dabei insbesondere nur einen Anschluss für eine externe Energie- oder Wärmequelle und einen Abgabeanschluss für das aufbereitete Gas zur direkten Zuführung an Verbraucher erforderlich macht. Kritische Anschlüsse und Kupplungen für Flüssiggas wie LNG können vollständig vermieden werden.

## Patentansprüche

1. Mobiles Container-Tankmodul
für Flüssiggas als Kraftstoff für Antriebs- oder Energieerzeugungs-Aggregate als Verbraucher,
mit mindestens einer im Container-Tankmodul (1) vorgesehenen Prozesseinrichtung (6) zur Verdampfung des Flüssiggases,
wobei das Container-Tankmodul für die Verdampfung von Flüssiggas einen Anschluss für eine externe Energiequelle oder eine integrierte Energiequelle aufweist,
wobei mindestens ein Anschluss zur Abgabe für aufbereitetes Gas an die Antriebs- und Energieerzeugungsaggregate vorgesehen ist,
wobei die integrierten Prozesseinrichtungen geschützt im Container-Tankmodul (1) angeordnet sind,
wobei die Prozesseinrichtungen in Gehäusen (6, 7) und/oder Boxen (15, 16, 17) innerhalb der Abmessungen des Container-Tankmoduls vorgesehen sind, wobei alle Prozesseinrichtungen zur Aufbereitung des Flüssiggases für die direkte Kraftstoff-Abgabe an die Antriebs- oder Energieerzeugungs-Aggregate, insbesondere zur Verdampfung des Flüssiggases, zur Erwärmung des Gases, zur Komprimierung, zur Druckeinstellung und zur Förderung des Gases, als innerhalb der Abmessungen des Container-Tankmoduls (1) integrierte Prozesseinrichtungen vorgesehen sind, und
wobei an einem Endportal (11) des Container-Tankmoduls (1) die Außenanschlüsse von gasführenden Leitungen gekapselt in einer Box (15) vorgesehen sind,
**dadurch gekennzeichnet**
**dass** die Gehäuse (6, 7) innerhalb der Abmessungen des Container-Tankmoduls unter dessen cryogenischem Tank (2) vorgesehen sind, und
**dass** am entgegengesetzten Endportal (12) mindestens eine Box (16) zur Aufnahme von elektrischen und elektronischen Komponenten, und Steckverbindungen zu Außenanschlüssen vorgesehen ist.

2. Container-Tankmodul nach Anspruch 1,
**dadurch gekennzeichnet,**
**dass** der cryogenische Tank (2), insbesondere ein isolierter Drucktank, für LNG, LPG oder andere verdampfbare Flüssigkraftstoffe, wie beispielsweise Methanol, vorgesehen ist.

3. Container-Tankmodul nach Anspruch 1 oder 2,
**dadurch gekennzeichnet,**
**dass** die erforderlichen Prozesskomponenten (16) zur Steuerung und Überwachung der Prozessabläufe, wie Verdampfung oder Komprimierung des Flüssiggases, und der Zustände des Flüssiggases, integriert im Container-Tankmodul (1) vorgesehen sind.

4. Container-Tankmodul nach einem der Ansprüche 1 bis 3,
**dadurch gekennzeichnet,**
**dass** drahtlose Übertragungsmittel zur GPS-Überwachung des Container-Tankmoduls und zur Datenübertragung für die Überwachung und Steuerung von Parametern des Container-Tankmoduls und der Prozessabläufe vorgesehen sind.

5. Container-Tankmodul nach einem der Ansprüche 1 bis 4,
**dadurch gekennzeichnet,**
**dass** eine Schnittstelle oder Kommunikationseinrichtung zu den Verbrauchern vorgesehen ist, um bidirektional Anforderungsparameter wie Energiebedarf an Kraftstoff oder Kraftstoffspezifizierung, auszutauschen.

6. Container-Tankmodul nach einem der Ansprüche 1 bis 5,
**dadurch gekennzeichnet,**
**dass** die Gehäuse (6, 7) und/oder Boxen (15, 16, 17) gasdicht und tieftemperaturgeeignet ausgelegt sind.

7. Container-Tankmodul nach einem der Ansprüche 1 bis 6,
**dadurch gekennzeichnet,**
**dass** zur Verdampfung des Flüssiggases eine Einrichtung mit kompaktem Röhren- oder Plattenwärmetauscher vorgesehen ist, und
**dass** der Einrichtung externe Prozesswärme, wie Kühlwasser von Verbrennungsmotoren oder teilweise See- oder Grundwasser zugeführt ist.

8. Container-Tankmodul nach einem der Ansprüche 1 bis 7,
**dadurch gekennzeichnet,**
**dass** der Abgabedruck des verdampften Flüssiggases, insbesondere von LNG, an Verbraucher auf ein Druckniveau von etwa 5 bis maximal 10 bar eingestellt ist.

9. Container-Tankmodul nach einem der Ansprüche 1 bis 8,
**dadurch gekennzeichnet,**
**dass** die integrierte Heizeinrichtung für die Verdampfung von Flüssiggas in Art einer Standheizung für Fahrzeug ausgelegt ist.

## Claims

1. Mobile container-tank module
for liquid gas as fuel for drive units or energy-generation units as consumers, having at least one process device (6) provided in the container-tank module (1) for vaporizing the liquid gas,
wherein the container-tank module has a connection for an external energy source or an integrated energy source, for vaporizing liquid gas,
wherein at least one connection is provided for delivering processed gas to the drive units and energy-generation units,
wherein the integrated process devices are arranged in the container-tank module (1) in a protected manner,
wherein the process devices are provided in housings (6, 7) and /or boxes (15, 16, 17) within the dimensions of the container-tank module,
wherein all the process devices for processing the liquid gas for direct fuel delivery to the drive units or energy-generation units, in particular for vaporizing the liquid gas, for heating the gas, for compressing, for adjusting the pressure of and for feeding the gas, are provided as process devices integrated within the dimensions of the container-tank module (1), and
the external connections of gas-carrying lines are provided enclosed in a box (15) at an end portal (11) of the container-tank module (1),
**characterized in that**
the housings (6, 7) are provided within the dimensions of the container-tank module beneath its cryogenic tank (2), and
at least one box (16) for receiving electrical and electronic components, and plug-type connections to external connections is provided at the opposite end portal (12).

2. Container-tank module according to claim 1,
**characterized in that**
the cryogenic tank (2), in particular an insulated pressure tank, for LNG, LPG or other vaporizable liquid fuels, such as, for example, methanol, is provided.

3. Container-tank module according to claim 1 or 2,
**characterized in that**
the required process components (16) for controlling and monitoring the process sequences, such as vaporization or compression of the liquid gas, and the states of the liquid gas are integrated in the container-tank module (1).

4. Container-tank module according to any one of claims 1 to 3,
**characterized in that**
wireless transmission means for GPS tracking of the container-tank module and for data transfer for monitoring and controlling of parameters of the container-tank module and the process sequences are provided.

5. Container-tank module according to any one of claims 1 to 4,
**characterized in that**
there is provided an interface or communication device with the consumers, in order to bidirectionally exchange requirement parameters, such as energy requirement in terms of fuel or fuel specification.

6. Container-tank module according to any one of claims 1 to 5,
**characterized in that**
the housings (6, 7) and/or boxes (15, 16, 17) are designed to be gas-tight and suitable for cryogenic temperatures.

7. Container-tank module according to any one of claims 1 to 6,
**characterized in that**
for the vaporization of the liquid gas, a device having compact tubular or plate heat exchanger is provided, and
**in that** external process heat, such as cooling water from combustion engines or in some cases sea- or groundwater, is fed to the device.

8. Container-tank module according to any one of claims 1 to 7,
**characterized in that**
the delivery pressure of the vaporized liquid gas, in particular of LNG, to consumers is set at a pressure level of from approximately 5 to not more than 10 bar.

9. Container-tank module according to any one of claims 1 to 8,
**characterized in that**
the integrated heating device for the vaporization of liquid gas is designed in the manner of an auxiliary heating system for vehicles.

## Revendications

1. Module conteneur-citerne (1) mobile pour du gaz liquéfié servant de carburant à une unité motrice ou de production d'énergie en tant qu'utilisateurs,
Prévoyant au moins une installation pour procéder (6) à la vaporisation du gaz,
Où le module conteneur-citerne présente au moins un raccordement pour une source d'énergie externe ou intégrée destinée à la vaporisation du gaz liquéfié,
Où il est prévu au moins un raccordement pour passer le gaz préparé à l'unité motrice et de production d'énergie,
Où les installations intégrées pour l'application de procédés sont disposées de manière protégée dans le module conteneur-citerne (1),
Où les installations pour l'application de procédés se trouvent dans des logements (6, 7) ou des boîtiers (15, 16, 17) à l'intérieur des dimensions du module conteneur-citerne,
Où toutes les installations pour procéder à la préparation du gaz liquéfié en vue de transférer directement le carburant à l'unité motrice ou de production d'énergie, notamment pour la vaporisation du gaz liquéfié, pour l'échauffement du gaz, pour la compression du gaz, pour établir une pression et faire progresser le gaz font partie des installations d'application de de procédés intégrées à l'intérieur des dimensions du module conteneur-citerne (1),
Où à l'endroit d'un portail terminal (11) du module conteneur-citerne (1), les raccordements extérieurs des conduites de gaz se trouvent enfermées dans un boîtier (15),
**Caractérisé en ce que**
Les logements (6, 7) se trouvent à l'intérieur dans le module conteneur-citerne sous le caisson cryogénique (2) de celui-ci,
Sur le portail terminal (12) correspondant se trouve au moins un boîtier (16) pour recevoir les composants électriques et électroniques et les connexions à l'annexe extérieure.

2. Module conteneur-citerne selon la revendication 1, **caractérisé en ce que** le caisson cryogénique (2), en particulier un citerne sous pression isolé, est adapté à du LNG, du LPG ou un autre carburant liquide vaporisable comme du méthanol.

3. Module conteneur-citerne selon la revendication 1 ou 2, **caractérisé en ce que** les composants (16) requis pour le pilotage et la surveillance du déroulement des procédés, comme la vaporisation ou la compression du gaz liquéfié, et de l'état du gaz liquéfié se trouvent intégrés dans le module conteneur-citerne (1).

4. Module conteneur-citerne selon la revendication 1 à 3, **caractérisé en ce qu'**il comporte des moyens de transmission sans fil pour la surveillance par GPS du module-citerne et des moyens de transmission des données pour la surveillance et le pilotage du déroulement des procédés.

5. Module conteneur-citerne selon la revendication 1 à 4, **caractérisé en ce qu'**il comporte une interface ou un moyen de communication aux utilisateurs pour échanger de manière bidirectionnelle des paramètres quant aux exigences comme le besoin en énergie sous forme de carburant ou des spécifications de carburant.

6. Module conteneur-citerne selon la revendication 1 à 5, **caractérisé en ce que** les logements (6, 7) et/ou les boîtes (15, 16, 17) sont configurés pour être étanches au gaz et adaptés à des températures basses.

7. Module conteneur-citerne selon la revendication 1 à 6, **caractérisé en ce qu'**il comporte une installation avec des caloducs compacts ou des plaques d'échanges thermiques compactes en vue de la vaporisation du gaz liquéfié et **en ce que** des calorifères externes comme de l'eau froide des moteurs d'allumage, ou, partiellement, de l'eau des lacs ou des nappes phréatiques sont amenés à l'installation

8. Module conteneur-citerne selon la revendication 1 à 7, **caractérisé en ce que** la pression de transfert du gaz liquéfié vaporisé à un utilisateur, en particulier du LNG, est établie à un niveau de pression de 5 bars environ à 10 bars au maximum.

9. Module conteneur-citerne selon la revendication 1 à 8, **caractérisé en ce que** l'installation de chauffage intégrée pour la vaporisation du gaz liquéfié est configurée à la façon d'une installation auxiliaire pour un véhicule
